# EUROPÄISCHE PATENTANMELDUNG

(11) **EP 1 848 067 A2**
(43) Veröffentlichungstag der Anmeldung: **24.10.2007**
(21) Anmeldenummer: 07006629.5
(22) Anmeldetag: 30.03.2007
(51) Int. Cl.: H01R 13/58

(54) **Leitungsbefestigungsvorrichtung**

(30) Priorität: 21.04.2006 DE 20606651 U
(71) Anmelder: REHAU AG + Co, 95111 Rehau (DE)
(72) Erfinder: Schork, Rainer, 91330 Bammersdorf (DE); Mordhorst, Johannes, 24232 Schönkirchen (DE); Schinzel, Hartmut, 95213 Münchberg (DE); Weerts, Carsten, 31515 Wunstorf (DE)

(57) **Zusammenfassung**

Die Erfindung betrifft eine Leitungsbefestigungsvorrichtung (123), vorzugsweise für eine Installationseinheit wie Kabelkanäle, Geräteeinbaudosen, Stecker, Steckdosen und dergleichen, umfassend: zwei Anlageabschnitte (123a, 123b), welche mit wenigstens einem Endstück elektrischer Leitungen in Anlage bringbar sind, wobei die Leitungsbefestigungsvorrichtung (123), zwischen einer ersten Stellung, in welcher das Endstück elektrischer Leitungen einlegbar ist, und einer zweiten Stellung, in welcher das Endstück elektrischer Leitungen festgelegt ist, überführbar ist. Die Leitungsbefestigungsvorrichtung (123) zeichnet sich durch einen gegenüber dem zweiten Anlageabschnitt (123b) um eine Schwenkachse verschwenkbaren ersten Anlageabschnitt (123a) aus.

## Beschreibung

Die Erfindung betrifft eine Leitungsbefestigungsvorrichtung für elektrische Installationseinheiten wie Kabelkanäle, Geräteeinbaudosen, Stecker, Steckdosen und dergleichen gemäß dem Oberbegriff des Anspruches 1.

Derartige Leitungsbefestigungsvorrichtungen für elektrische Installationseinheiten sind vielfach aus dem Stand der Technik bekannt. Diese Leitungsbefestigungsvorrichtungen bestehen im Allgemeinen aus zwei Anlageabschnitten, welche mit einem Endstück einer elektrischen Leitung in Anlage bringbar sind. Dabei sind derartige Leitungsbefestigungsvorrichtungen zwischen einer ersten Stellung, in welcher das Endstück der elektrischen Leitung einlegbar ist und einer zweiten Stellung, in welcher das Endstück der elektrischen Leitung festlegbar ist, überführbar.
Derartige Leitungsbefestigungsvorrichtungen umfassen einen ersten Anlageabschnitt und einen zweiten Anlageabschnitt, wobei der erste Anlageabschnitt und der zweite Anlagenabschnitt über geeignete Verbindungsmittel wie bspw. zwei Schrauben verbindbar bzw. fixierbar sind. Zwischen dem ersten und dem zweiten Anlageabschnitt bildet sich somit eine Öffnung aus, in der das Endstück der elektrischen Leitung fixierend einbringbar ist.

Bei den bekannten Leitungsbefestigungsvorrichtungen weist der erste Anlageabschnitt zwei Öffnungen auf, durch die die als Schrauben ausgebildeten Verbindungsmittel in die entsprechenden gegenüberliegenden Öffnungen des zweiten Anlageabschnittes einbringbar und mit entsprechenden Umdrehungen der erste Anlageabschnitt gegen den zweiten Anlageabschnitt bewegt und somit das dazwischen befindliche Endstück elektrischer Leitungen fixierbar ist.

Nachteilig bei diesen bekannten Leitungsbefestigungsvorrichtungen ist, dass immer ein Verbindungsmittel aus einer Öffnung des ersten Anlageabschnittes herausgenommen werden muss, um den ersten Anlageabschnitt über die durch die zweite Schraube gebildete Drehachse vom zweiten Anlageabschnitt wegzubewegen.

Hierbei kann es nachteiligerweise zum Verlust der Verbindungsmittel beispielsweise der Schraube kommen bzw. zu einer sehr umständlichen, zeitaufwändigen und damit unwirtschaftlichen Montage von elektrischen Leitungen bei derartigen Installationseinheiten.

Der Erfindung liegt die Aufgabe zugrunde, die herkömmliche Leitungsbefestigungsvorrichtung dahingehend zu verbessern, dass diese kostengünstiger und wirtschaftlicher herstellbar, sowie schneller und sicherer montierbar sind.

Erfindungsgemäß wird dies durch die kennzeichnenden Merkmale des Anspruches 1 gelöst.
Vorteilhafte Weiterbildungen der Erfindung werden in den Unteransprüchen beansprucht.

Es ist erfindungsgemäß vorgesehen, dass die zwei Anlageabschnitte aufweisende Leitungsbefestigungsvorrichtung, welche mit einem Endstück elektrische Leitungen in Anlage bringbar sind, wobei die Leitungsbefestigungsvorrichtung zwischen einer ersten Stellung, in welcher das Endstück der elektrischen Leitungen einlegbar ist, und einer zweiten Stellung, in welcher das Endstück der elektrischen Leitungen festgelegt ist, überführbar ist, wobei der erste Anlageabschnitt gegenüber dem zweiten Anlageabschnitt um eine Schwenkachse verschwenkbar ist. Somit kann ein Endstück der elektrischen Leitungen gegenüber einer wie auch immer ausgebildeten Installationseinheit, festgelegt werden, ohne dass es sich bei einer Zugbelastung aus der an der Installationseinheit vorgesehenen Anschlussvorrichtung lösen kann, was zu einer Unterbrechung der Stromversorgung führen würde.

In einer weiteren bevorzugten Ausführungsform der Erfindung weist die Leitungsbefestigungsvorrichtung eine Rastvorrichtung auf, womit der schwenkbare Anlageabschnitt in zumindest einer Schwenkstellung verrastbar ist. Erfahrungsgemäß bereitet es Schwierigkeiten, das Endstück der elektrischen Leitungen zunächst einzufangen, in Position zu halten und anschließend dauerhaft zu festzulegen.
Durch die Verschwenkung des ersten Anlageabschnitts wird das Endstück elektrischer Leitungen eingefangen und durch die Verrastung in Position gehalten, so dass es aus dieser Position leicht dauerhaft festlegbar ist. Dabei wird die Montagefreundlichkeit der Leitungsbefestigungsvorrichtung erheblich verbessert.

In einer weiteren bevorzugten Ausführungsform der Erfindung ist zumindest einer der Anlageabschnitte entlang der Schwenkachse bewegbar bzw. verstellbar. Durch die Bewegbarkeit bzw. Verstellbarkeit eines der Anlageabschnitte ist das Endstück elektrischer Leitungen aus der eingefangenen Position leicht festlegbar.

In einer weiteren bevorzugten Ausführungsform der Erfindung ist der schwenkbare Anlageabschnitt entlang der Schwenkachse bewegbar.

In einer weiteren ebenfalls bevorzugten Ausführungsform der Erfindung verläuft die Schwenkachse im Wesentlichen senkrecht zu einer Ebene, welche eine Achse einer zu befestigenden elektrischen Leitung einschließt.

Eine beispielhafte Ausführungsform der Erfindung nach einer der obigen Ausführungsformen, welche die Erfindung nicht einschränken soll, ist in der nachfolgenden Figur beschrieben.

### Kurze Beschreibung der Figur

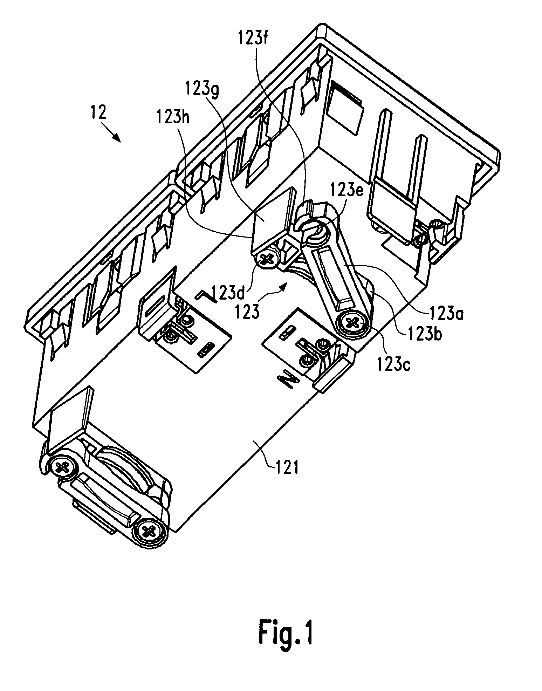

- Fig. 1: zeigt eine Explosionsdarstellung einer Installationseinheit mit erfindungsgemäßen Leitungsbefestigungsvorrichtungen

### Detaillierte Beschreibung der bevorzugten Ausführungsbeispiele

In der nachfolgenden Beschreibung werden positionsangebende Begriffe wie "oben", "unten", "links", "rechts", etc., verwendet, die dem besseren Verständnis der Erfindungsbeschreibung dienen und sich auf die jeweils dargestellte Ansicht beziehen. Darüber hinaus wird diesen Begriffen kein beschränkender Charakter beibemessen.

Fig. 1 zeigt eine perspektivische Ansicht, von schräg unten, einer als Installationseinheit ausgebildeten Geräteeinbaudose 12.
Die Geräteeinbaudose 12 ist als vorverdrahtete elektrische Baugruppe, bspw. als Mehrfachsteckdose mit zwei Steckplätzen ausgebildet. Die vorverdrahtete elektrische Baugruppe kann beispielsweise aber auch als Mehrfachsteckdose mit mehr als zwei Steckplätzen oder als Anschlußdose für bspw. Telefon, Computer und dergleichen ausgebildet sein.

Die Geräteeinbaudose 12 umfasst einen im Wesentlichen blockförmigen Körper mit einer Höhe und Breite von ca. 40 mm und einer Länge von ca. 100 mm. Die Frontdeckel der Steckdosen sind in der Vorderansicht jeweils im Wesentlichen quadratisch und weisen eine Kantenlänge von jeweils 50 mm auf, d.h. sie stehen über den blockförmigen Körper der Geräteeinbaudose 12 in Richtung der Breite leicht über.

An der Unterseite 121 der Geräteeinbaudose 12 sind in diesem Ausführungsbeispiel zwei Leitungsbefestigungsvorrichtungen 123 vorgesehen, die nachstehend beschrieben werden.

Die Leitungsbefestigungsvorrichtungen 123 haben die Funktion, die an die Geräteeinbaudose 12 hinführenden und die von der Geräteeinbaudose 12 wegführenden Leitungen bei einer Zugbelastung gegenüber Herausziehen aus einer zugeordneten Anschlusseinheit zu sichern. Jeder Anschlusseinheit ist wenigstens eine als Zugentlastung ausgebildete Leitungsbefestigungsvorrichtung 123 zugeordnet.

Die Leitungsbefestigungsvorrichtung 123 umfasst einen ersten Anlageabschnitt 123a und einen zweiten Anlageabschnitt 123b, wobei die ersten und zweiten Anlageabschnitte 123a, 123b über zwei Schrauben 123c bzw. 123d verbindbar sind. Die zwei Schrauben 123c bzw. 123d bilden erste und zweite Verbindungsmittel im Sinne der Erfindung.
Beide Anlageabschnitte 123a und 123b weisen im Wesentlichen dieselbe bügelförmige Gestalt mit einseitiger, mittiger, bogenförmiger Einkerbung auf.
Wenn sich die Anlageabschnitte 123a und 123b gegenüberliegen, bilden die bogenförmigen Einkerbungen eine näherungsweise kreisförmige Aufnahme für hier nicht dargestellte elektrische Leitungen.

Eine Schraube 123c erstreckt sich durch eine Öffnung an einem Ende des ersten Anlageabschnitts 123a und ist in einer Schrauböffnung an einem Ende des zweiten Anlageabschnitt 123b verschraubt.
Die Schraubachse der Schraube 123c definiert eine Schwenkachse, über welche der erste Anlageabschnitt 123a gegenüber dem zweiten Anlageabschnitt 123b verschwenkbar ist. Die Schwenkachse verläuft dabei im Wesentlichen senkrecht zu einer Ebene, welche eine Achse einer in der Aufnahme aufzunehmenden elektrische Leitung einschließt.
An dem von der Schwenkachse radial entfernten Ende des ersten Anlageabschnitts 123a ist radial außenseitig eine Rastnase 123f ausgebildet, die an einem flexiblen Rastvorsprung 123g verrastbar ist. Dabei kann der erste Anlageabschnitt 123a in zumindest einer Schwenkstellung verrastet werden.

Die Leitungsbefestigungsvorrichtung 123 ist zwischen einer ersten Stellung, in welcher ein hier nicht dargestelltes Endstück einer elektrischen Leitung einlegbar ist und einer zweiten Stellung, in welcher das Endstück der elektrischen Leitung festgelegt ist, überführbar.
In der ersten Stellung bilden die Anlageabschnitte 123a und 123b über die Schwenkachse vorzugsweise einen Winkel von mehr als 90°, damit das Endstück einer elektrischen Leitung ungehindert einlegbar ist. In der zweiten Stellung liegen die Anlageabschnitte 123a, 123b im wesentlichen übereinander, wobei die bogenförmigen Einkerbungen zueinander im Wesentlichen spiegelsymmetrisch angeordnet sind, und wobei die Anlageabschnitte 123a und 123b über die Schwenkachse einen Winkel von 0° bilden.

Zum Überführen von der ersten Stellung in die zweite Stellung ist der erste Anlageabschnitt 123a in einer Richtung verschwenkbar, die als Schließrichtung bezeichnet wird. Zum Überführen von der zweiten Stellung in die erste Stellung ist der erste Anlageabschnitt 123a in einer der Schließrichtung entgegengesetzten Öffnungsrichtung verschwenkbar.

Die Rastnase 123f des ersten Anlageabschnitts 123a weist auf der in Schließrichtung vorne liegenden Seite einen geringeren Radius auf als an der in Schließrichtung hinten liegenden Seite, so dass sie an der radial außenliegenden Seite eine Keilfläche bildet.

Der flexible, blattförmige Rastvorsprung 123g ist in etwa tangential zu einem gedachten Kreis um die Schwenkachse angeordnet und um eine tangential zu dem gedachten Kreis verlaufende Biegeachse biegbar.
Beim Verschwenken des ersten Anlageabschnitts 123a in Schließrichtung ist der blattförmige Rastvorsprung 123g bei Berührung mit der Keilfläche der Rastnase 123f auslenkbar und um die Biegeachse verbiegbar. An der radial innenliegenden Fläche des blattförmigen Rastvorsprungs 123g kann eine Vielzahl von Rastnuten vorgesehen sein, in welchen die Rastnase 123f einrastbar ist, um den ersten Anlageabschnitt 123a in verschiedenen Schwenkstellungen zu verrasten.

Am freien Ende des ersten Anlageabschnitts 123a ist eine schlitzförmige Aussparung 123e mit Zugang von der in Schwenkrichtung vorne liegenden Seite derart ausgebildet, dass der Schaft der zweiten Schraube 123d in einer entsprechenden Schwenkstellung des ersten Anlageabschnitts 123a in der Aussparung 123e aufnehmbar ist. In der Schwenkstellung, in der die Schraube 123d vollständig in der Aufnahme 123e des ersten Anlageabschnitts 123a aufgenommen ist, befindet sich die Rastnase 123f an der Rastkante 123h des flexiblen Rastvorsprungs 123g in Anlage.

In einer derartigen Position ist der erste Anlageabschnitt 123a festgelegt, da die Schwenkbewegung einerseits durch die Schraube 123d und andererseits durch die Rastkante 123h unterbunden wird.
Um die verrastete Stellung des ersten Anlageabschnitts 123a aus dieser Position zu lösen, muss der flexible Rastvorsprung 123g weggebogen werden, so dass die Rastnase 123f vorbeiführbar ist und der Anlageabschnitt 123a in seine Ausgangsstellung verschwenkbar ist.

Die im Rücken der bogenförmigen Einkerbung liegende Seite des verschwenkbaren Anlageabschnitts 123a bildet im Wesentlichen eine ebene Fläche.

Die bevorzugte Anwendung der erfindungsgemäßen Leitungsbefestigungsvorrichtung 123 wird nachstehend mit Bezug auf die beiliegende Zeichnung beschrieben.

Um die als vorverdrahtete elektrische Baugruppe ausgebildete Geräteeinbaudose 12 in einem elektrischen Stromkreis einzubinden, werden die Endstücke der elektrischen Leitungen in die jeweiligen Leitungsbefestigungsvorrichtungen 123 eingesetzt und befestigt. Dieser Vorgang wird nachfolgend einmal für den Anschluss eines hier nicht dargestellten Endstückes einer elektrischen Leitung beschrieben.

Wie oben beschrieben wurde, umfasst jede Leitungsbefestigungsvorrichtung 123 zwei Anlageabschnitte 123a, 123b, welchen mit einem Endstück elektrischer Leitungen in Anlage bringbar sind, wobei die Leitungsbefestigungsvorrichtung 123 zwischen einer ersten Stellung, in welcher das Endstück elektrischer Leitungen einlegbar ist, und einer zweiten Stellung, in welcher das Endstück elektrischer Leitungen festgelegt ist, überführbar ist.

In der ersten Stellung bzw. der Ausgangsstellung ist der erste Anlageabschnitt 123a derart angeordnet, dass das Endstück elektrischer Leitungen in die Leitungsaufnahme des zweiten Anlageabschnitts 123b einlegbar ist. Anschließend wird der erste Anlageabschnitt 123a um die Schwenkachse verschwenkt. Beim Verschwenken des ersten Anlageabschnitts 123a wird der flexible Rastvorsprung 123g von der keilförmigen Fläche an der Rastnase 123f ausgelenkt und weggebogen. Die Rastnase 123f wird am Rastvorsprung 123g vorbeigeführt, bis die Rastnase 123f hinter dem Rastvorsprung 123g einrastet. In dieser Stellung befindet sich der Schaft der Schraube 123d in der Aufnahme 123e. Eine weiterführende Schwenkbewegung wird durch die Schraube 123d gestoppt. Eine entgegengesetzte Schwenkbewegung wird dadurch verhindert, dass eine Anschlagfläche der Rastnase 123f an der Rastkante 123h des Rastvorsprungs 123g anliegt.

In dieser verrasteten Schwenkstellung wird der erste Anlageabschnitt 123a durch Anziehen der Schrauben 123c und 123d entlang der Schwenkachse verstellt und auf den zweiten Anlageabschnitt 123b zugeführt, wobei das Endstück elektrischer Leitungen (nicht dargstellt) zwischen den beiden Anlageabschnitten 123a und 123b festgeklemmt ist.
Die Schrauben 123c und 123d werden vollständig eingeschraubt, bis deren Schraubköpfe in den topfförmigen Schraubenkopfaufnahmen des ersten Anlageabschnitts 123a verschwinden und nicht mehr über die ebene Anlagefläche des ersten Anlageabschnitts 123a hervorstehen.

Die eben beschriebene Methode der Leitungsbefestigung wird für viele Endstücke elektrischer Leitungen gleichermaßen angewendet. So wird jedes Endstück elektrischer Leitungen auch bei einer einwirkenden Leitungsbefestigungsvorrichtung 123 in Position gehalten. Anschließend werden die Endstücke elektrischer Leitungen an entsprechenden Anschlusseinrichtungen der Geräteeinbaudose 12 angeschlossen.
Zum Abkoppeln werden die Leitungsbefestigungsvorrichtungen 123 durch Lösen der Schrauben 123c und 123d, Verbiegen des Rastvorsprungs 123g und Verschwenken des ersten Anlageabschnitts 123a in die erste Stellung überführt, und die Leistungsendstücke können aus den Leitungsbefestigungsvorrichtungen 123 sowie möglichen Anschlussvorrichtungen entnommen werden.

Es liegt jedoch auch im Rahmen der Erfindung, derartige Leitungsbefestigungsvorrichtungen 123 in bzw. an allen solchen Installationseinheiten zu verwenden, bei denen elektrische bzw. optische oder andere Leitungen zu fixieren sind.

## Patentansprüche

1. Leitungsbefestigungsvorrichtung (123), vorzugsweise für eine Installationseinheit wie Kabelkanäle, Geräteeinbaudosen, Stecker, Steckdosen und dergleichen, umfassend: zwei Anlageabschnitte (123a, 123b), welche mit wenigstens einem Endstück elektrischer Leitungen in Anlage bringbar sind, wobei die Leitungsbefestigungsvorrichtung (123), zwischen einer ersten Stellung, in welcher das Endstück elektrischer Leitungen einlegbar ist, und einer zweiten Stellung, in welcher das Endstück elektrischer Leitungen festgelegt ist, überführbar ist, **dadurch gekennzeichnet, dass** der erste Anlageabschnitt (123a) gegenüber dem zweiten Anlageabschnitt (123b) um eine Schwenkachse verschwenkbar ist.

2. Leitungsbefestigungsvorrichtung (123) nach Anspruch 1, **dadurch gekennzeichnet, dass** die Leitungsbefestigungsvorrichtung (123) eine Rastvorrichtung (123f, 123g, 123h) aufweist, womit der schwenkbare Anlageabschnitt (123a) in zumindest einer Schwenkstellung verrastbar ist.

3. Leitungsbefestigungsvorrichtung (123) nach einem der Ansprüche 1 bis 2, **dadurch gekennzeichnet, dass** zumindest einer der Anlageabschnitte (123a) entlang der Schwenkachse bewegbar ist.

4. Leitungsbefestigungsvorrichtung (123) nach Anspruch 3, **dadurch gekennzeichnet, dass** der schwenkbare Anlageabschnitt (123a) entlang der Schwenkachse bewegbar ist.

5. Leitungsbefestigungsvorrichtung (123) nach einem der Ansprüche 1 bis 4, **dadurch gekennzeichnet, dass** die Schwenkachse im Wesentlichen senkrecht zu einer Ebene verläuft, welche eine Achse eines zu befestigenden Endstückes einer elektrischen Leitung einschließt.
